# EUROPÄISCHE PATENTSCHRIFT

(11) **EP 0 929 136 B1**
(45) Veröffentlichungstag und Bekanntmachung des Hinweises auf die Patenterteilung: **10.04.2002**
(21) Anmeldenummer: 98204440.6
(22) Anmeldetag: 23.12.1998
(51) Int. Cl.: H02B 7/08

(54) **Zum versenkten Aufstellen auf (semi) öffentlichem Boden bestimmte Energieverteilungsstation zur Spannungsentnahme durch Privatpersonen oder Betriebe**
Power station placed on (semi)public ground to supply a private subscriber or a company
Poste de distribution d'énergie placée à un endroit (semi)publique pour alimenter un particulier ou une entreprise

(30) Priorität: 07.01.1998 NL 1007973
(43) Veröffentlichungstag der Anmeldung: 14.07.1999
(73) Patentinhaber: Odink & Koenderink B.V., 7482 CA Haaksbergen (NL)
(72) Erfinder: Kienhuis, Johannes Henricus Maria, 7591 GA Denekamp (NL); Metternich, Stefan Herman Jeroen, 7541 AJ Enschede (NL)
(74) Vertreter: Boelsma, Gerben Harm, Ir.

(56) Entgegenhaltungen:
- WO-A-95/34113
- DE-U- 29 620 779

## Beschreibung

Die Erfindung betrifft eine Energieverteilungsstation, wie definiert im ersten Teil des Anspruchs 1.

Eine derartige Energieverteilungsstation ist im Dokument WO95/34113 (siehe insbesondere die Ausführung nach Fig. 6-8) offenbart worden. Bei dieser bekannten Station bildet der erste Deckel die obere Wand eines durch eine entsprechende Aussparung im zweiten Deckel hindurch nach oben bewegbaren Kastens, in einer senkrechten Wand desselben die Steckdosen übereinander versenkt angeordnet sind. Nicht nur bei angehobenen Deckeln, sondern auch bei geschlossenen Deckeln kann einerseits zwischen dem oberen Rand des Grubengehäuses und dem Umfangsrand des zweiten Deckels und andererseits zwischen dem Rand der Aussparung im zweiten Deckel und dem Umfangsrand des ersten Deckels (Regen)wasser in das Grubengehäuse hineinströmen, wobei das Wasser durch eine Öffnung im Boden des Grubengehäuses abgeführt werden soll.

Ein Nachteil dieser bekannten Energieverteilungsstation ist vor allem, dass der die Steckdosen enthaltende Kasten in der nach oben ausgefahrenen Gebrauchslage beschädigungsempfindlich ist und ein hinderliches Obstakel bildet. Massnahmen, dahin gehend, dass die Verteilungsstation an empfindlichen Stellen, wie die Steckdosen, auch bei Hochwasser vom Überschwingungstyp oder bei (ausserordentlich) hohem Grundwasserstand wasserfrei gehalten wird, werden nicht gezeigt.

Die Erfindung hat sich zur Aufgabe gestellt, eine verbesserte Energieverteilungsstation zu schaffen, welche den genannten Nachteil nicht hat und insbesondere auch bei Hochwasser einen ausreichenden Schutz bietet.

Erfindungsgemäss wird diese Aufgabe gelöst durch die im zweiten Teil des Anspruchs 1 beschriebenen Merkmale.

Infolge der erfindungsgemässen Massnahmen darf der Spiegel des Grundwassers bezw. des Regenwassers im Grubengehäuse, während der jeweilige Deckel verschlossen ist, ohne Bedenken bis oberhalb der unteren Ränder der Steckdosenbehälter steigen. Die Steckdosen bleiben dabei ja ausser Berührung mit dem (steigenden) Wasser, indem die sie aufnehmenden Behälter wie eine Luftglocke arbeiten.

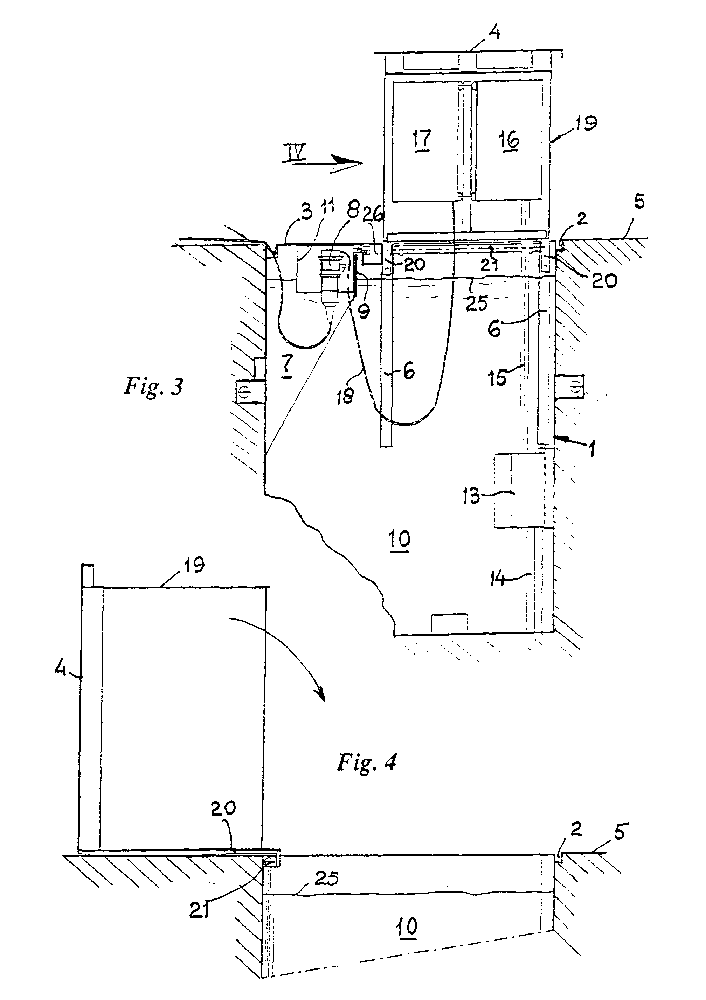

Zu bemerken ist, dass die amerikanische Patentschrift 2 247 936 (siehe insbesondere die Ausführungsform nach Fig. 4 und 5) ein im Boden gesenktes, mit einem Deckel verschliessbares Grubengehäuse offenbart ist, in dem ein unten offener und zum übrigen geschlossener, zylindrischer Behälter vorgesehen ist. Dieser Behälter stützt mit seinem unteren Rand auf dem Boden des Grubengehäuses und enthält elektrische Wiederholungsapparatur für ein Fernmeldesystem.

Beim Vollaufen des Grubengehäuses durch Grund- und/ oder Regenwasser arbeitet der Behälter wie eine Luftglocke und bleibt die Apparatur in der Luftblase innerhalb der Glocke ausser Kontakt mit dem Wasser im Grubengehäuse. Es handelt sich in diesem Fall um eine verhältnismässig umfangreiche und schwere Glocke, welche nur zur periodischen Wartung der durch die Luftglocke zu schutzenden Apparatur aus dem Grubengehäuse gehoben werden muss.

Weiterhin soll bemerkt werden, dass im nicht vorveröffentlichten Dokument EP-A-0905842 eine Energieverteilungsstation der obigen Gattung beschrieben wird, wobei eine Anzahl von nebeneinander angeordneten Steckdosen in einer Abteilung eines Grubengehäuses untergebracht sind, welche Abteilung mittels eines Klappdeckels verschliessbar ist und wobei in der Schliesslage dieses Deckels ebenfalls ein Spalt zwischen dem freien Längsrand des Deckels und dem benachbarten oberen Rand des Grubengehäuses vorhanden ist, durch den ein an einer Steckdose angeschlossenes Verbraucherkabel nach aussen passieren kann. In der Ausführung nach dem Dokument EP-A-0905842 sind die Steckdosen jedoch in einer festen Position innerhalb des Grubengehäuses angeordnet und fehlen Massnahmen, wodurch bei Hochwasser vom Überschwimmungstyp oder bei (ausserordentlich) hohem Grundwasserstand die Verteilungsstation an empfindlichen Stellen, wie die Steckdosen, wasserfrei gehalten werden können.

Praktische weitere Ausbildungen der Erfindung sind in den Unteransprüchen definiert worden.

Die Erfindung wird unten an Hand der Zeichnung mit einem Ausführungsbeispiel näher erläutert.

Es zeigen:
Fig. 1 einen Vertikalschnitt durch die erfindungsgemässe Verteilungsstation, bei geschlossenen Deckeln;
Fig. 2 einen Schnitt wie derjenige nach Fig. 1, aber jetzt mit dem einen Deckel in der geöffneten Lage;
Fig. 3 einen Schnitt wie derjenige nach Fig. 1, aber jetzt mit dem anderen Deckel in der geöffneten, gehobenen Lage und
Fig. 4 einen Vertikalschnitt, gesehen in der Richtung der Pfeile IV, und zwar mit dem am anderen Deckel befestigten Behälter in der geöffneten und gekippten Lage.

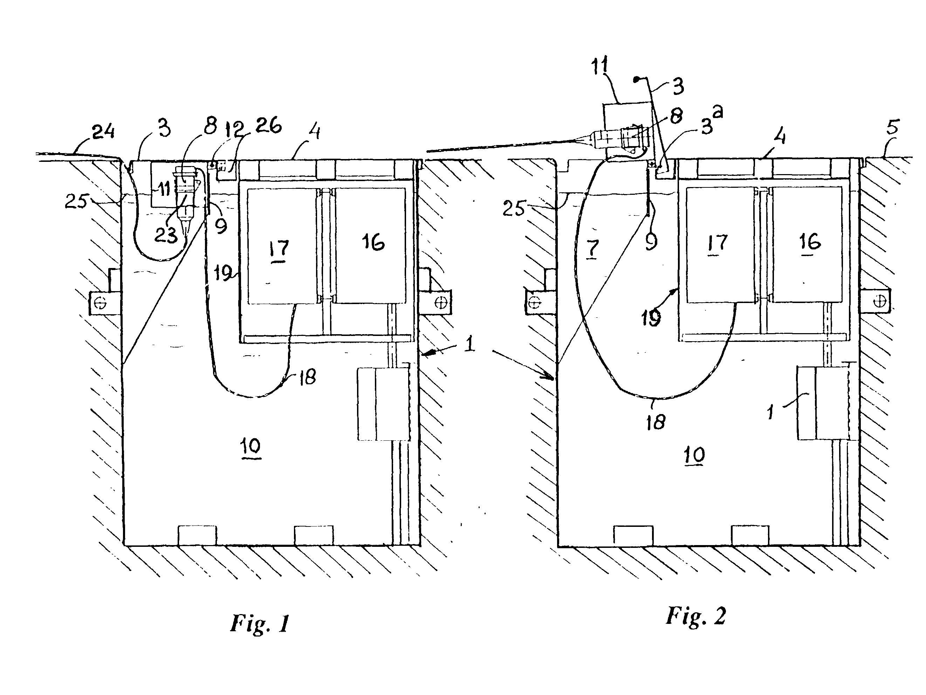

Die erfindungsgemässe Energieverteilungsstation hat ein im Boden versenktes rechteckiges Grubengehäuse 1 aus zum Beispiel gegen Korrosion behandeltem Stahlblech. Das Grubengehäuse 1 hat am oberen Rand ein sich längs drei Seiten erstreckendes Rinnenprofil 2, das sich an der vierten Seite (links in Fig. 1-3) am Raum des Grubengehäuses anschliesst.

Das Grubengehäuse 1 ist mittels zwei Deckel 3 und 4 verschliessbar, die in der Schliesslage mit der Strassendecke 5 (nahezu) in einer gemeinsamen Ebene liegen.

Der Deckel 3 ist um eine Achse 3a aufklappbar ausgebildet, während der Deckel 4 in Führungsschienen 6 zwischen der Schliesslage nach Fig. 1 und 2 und der geöffneten Lage nach Fig. 3 bewegbar geführt ist.

Im Raum des Grubengehäuses ist links in Fig. 3 mit Hilfe von Querwänden 7 eine Anzahl von Abteilungen gebildet, die insgesamt durch den Deckel 3 verschliessbar sind. In diesen Abteilungen sind die für Privatgebrauch oder betriebsmässige Verwendung bestimmten Steckdosen 8 untergebracht worden. Die Querwände 7 sind oben mittels einer senkrechten Verbindungswand 9, welche die Abteilungen vom übrigen Raum 10 des Grubengehäuses 1 trennt, miteinander verbunden.

Die Steckdosen 8 sind gesondert oder gruppenweise in normalerweise - bei geschlossenem Deckel 3 - unten offenen und zum übrigen geschlossenen Behältern 11 angebracht. Bei geschlossenem Deckel 3 (Fig. 1 und 3) liegen die Behälter 11 an der Vertikalwand 9 an und liegt der Deckel 3 auf der Obenseite der Behälter 11 bezw. den oberen Rändern der Trennungswände 7 an.

Die Behälter 11 sind unabhängig voneinander um eine Achse 12 drehbar montiert, welche in kurzem Abstand von und parallel zu der Drehachse 3a des Deckels 3 vorgesehen ist. Auf der von den Abteilungen mit den Behältern 11 abgekehrten Grubengehäusewand ist der sogenannte Übergangskasten 13 nach oben ausfahrbar befestigt. In diesem Übergangskasten geht das unten hineintretende steife (5-adrige) Grundkabel 14 in ein biegsames mehradriges Kabel 15 über, welches zu einem vom Deckel 4 getragenen Kasten 16 führt, in welchem die unter Verwaltung vom Energielieferanten stehende Sicherungs- und Messapparatur untergebracht ist. Der Kasten 16 hat eine Kabelverbindung mit der ebenfalls vom Deckel 4 getragenen Einheit 17, welche mittels gesonderter biegsamer Kabel 18 mit den Steckdosen 8 verbunden ist. Innerhalb der Einheit 17 werden die über die unterschiedlichen Steckdosen 8 abgenommenen Energiemengen gemessen und registriert.

Die Kästen 16 und 17 sind in einem am Deckel 4 aufgehängten, unten offenen und zum übrigen geschlossenen Behälter 19 angeordnet, welcher Behälter mit dem Deckel 4 über die Führungsschiene 6 auf und ab bewegbar ist.

Unten an der hinteren Wand des Behälters 19 (siehe Fig. 3) sind zwei Koppelstücke 20 vorgesehen, die in der oberen Lage des Behälters 19 (Fig. 3) auf einer an der betreffenden Seite längs des oberen Randes des Grubengehäuses gelagerten Drehungswelle 21 angreifen, in der Weise, dass nach dem Zustandekommen des Eingriffs zwischen den Koppelstücken 20 und der Drehungswelle 21 der Behälter 19 um die Drehachse 21 in die Lage gemäss Fig. 4 gekippt werden kann, in welcher Lage die Kästen 16 und 17 für Inspektion und andersartige Arbeiten zugänglich sind und gegebenenfalls wie eine Schublade aus dem Behälter 19 gezogen werden können. In Fig. 4 sind die Kästen 16 und 17 nicht näher dargestellt.

Die Zeichnung zeigt die Verteilungsstation in der Situation, in der das Regenwasser/Grundwasser innerhalb des Grubengehäuses 1 bis auf das mit 25 bezeichnete Niveau gestiegen ist. Dies bedeutet, dass in Fig. 1, wo die beiden Deckel 3 und 4 in einer nicht näher dargestellten Weise in der geschlossenen Lage verriegelt sind, sowohl innerhalb der Behälter 11, wie auch innerhalb des Behälters 19 eine Luftblase vorhanden ist, innerhalb welcher die Steckdosen 8 bezw. die Kästen 17 und 16 gegen Hineindringen von Wasser geschützt sind.

Nach Entriegeln und Aufklappen des Deckels 3 kann ein ausgewählter Behälter 11 aus der Lage nach Fig. 1 in diejenige nach Fig. 2 gebracht werden, zu welchem Zweck der Behälter mit einem nicht näher gezeigten Griff versehen sein kann.

In der Zeichnung ist die Steckdose 8 in Kombination mit einem wasserdicht am Ende eines Verbraucherkabels 24 angebrachten Stecker 23 gezeigt. In Fig. 1 und 3 liegt die Verbindungsstelle zwischen Steckdose und Stecker innerhalb der gegen das Hineindringen von Wasser schützenden Luftblase.

Normalerweise wird der Deckel 4 in der Schliesslage nach Fig. 1 und 2 mittels (in der Zeichnung nicht näher gezeigter) Verriegelungsmittel verriegelt, welche Mittel den in der Situation nach Fig. 1 und 2 auf dem Deckel 4 wirkenden Aufwärtsdruck aufnehmen können. Bei Entriegelung des Deckels 4 wird der Behälter 19 zunächst, unter dem Einfluss des genannten Aufwärtsdrucks, leicht aus dem Raum 10 des Pumpengehäuses nach oben bewegen, während zusätzliche Hebemittel benötigt sein werden um den Behälter 19 ganz (gemäss Fig. 3) aus dem Wasser heben zu können.

Der in der Zeichnung mit dem Regenwasser/Grundwasserniveau 25 angedeutete Zustand ist ein Zustand, der im allgemeinen nicht für längere Zeit auftreten wird. Normalerweise wird das Niveau 25 (weit) unten dem unteren Rand des im Raum 10 des Grubengehäuses gesenkten Behälters 19 liegen, sodass der Behälter dann leicht auf und ab bewegt werden kann und in die Lage nach Fig. 4 gekippt werden kann.

Schliesslich soll noch bemerkt werden, dass die Deckel 3 und 4 und die Stützmittel dafür schwer ausgebildet sind um in der geschlossenen Position die Belastung des darüber fahrenden Verkehrs aufnehmen zu können. Eine wichtige Rolle im Deckelunterstützung erfüllt dabei das mit 26 bezeichnete Rinnenprofil.

## Patentansprüche

1. Zum versenkten Aufstellen auf (semi)öffentlichem Boden bestimmte Energieverteilungsstation zur Spannungsentnahme durch Privatpersonen oder Betriebe, mit einem in den Boden einzusenkenden Grubengehäuse (1), das eine durch einen ersten Deckel (3) verschliessbare erste Abteilung mit Steckdosen (8) und eine durch einen zweiten Deckel (4) verschliessbare Abteilung zum Aufnehmen eines an einem untererdischen Kabel (14) anzuschliessenden Übergangskasten (13) aufweist, wobei der zweite Deckel (4) wenigstens einen weiteren, durch biegsame Kabel (15; 18) mit dem Übergangskasten (13) bezw. mit den Steckdosen (8) zu verbindenden Kasten (16, 17) für Sicherungs- und Messapparatur trägt, und wobei die Steckdosen einerseits und der (die) Kasten (Kästen) für Sicherungs- und Messapparatur andererseits durch Anheben des ersten (3) bezw. zweiten Deckels (4) aus der jeweiligen Abteilungen hebbar sind, **dadurch gekennzeichnet, dass** die Steckdosen (8) gesondert oder gruppenweise und nebeneinanderliegend, in unten offenen und zum übrigen geschlossenen Behältern (11) angeordnet sind, welche Behälter mit dem als Klappdeckel ausgebildeten ersten Deckel (3) verbunden sind, wobei in der Schliesslage dieses Deckels ein Spalt zwischen dem freien Längsrand des Deckels (3) und dem benachbarten oberen Rand des Grubengehäuses vorhanden ist, durch den ein an einer Steckdose (8) angeschlossenes Verbraucherkabel nach aussen passieren kann.

2. Verteilungsstation nach Anspruch 1, **dadurch gekennzeichnet, dass** die die Steckdosen (8) enthaltenden Behälter (11) um eine parallel zur Drehungsachse (3a) des betreffenden Deckels (3) verlaufende Achse (12) aufklapbar ausgebildet sind.

3. Verteilungsstation nach Ansprüchen 1-2, **dadurch gekennzeichnet, dass** die Behälter (11) in ihrer im Grubengehäuse (1) abgesenkten Position mittels ortsfester Querwände (7) voneinander getrennt sind.

4. Verteilungsstation nach Ansprüchen 1-3, **dadurch gekennzeichnet, dass** die Kästen (16, 17) mit Sicherungs- und Messapparatur ebenfalls in einem unten offenen und zum übrigen geschlossenen Behälter (19) angeordnet sind, welcher Behälter (19) auf und ab beweglich im Raum (10) des Grubengehäuses (1) geführt ist und in Kombination mit dem zweiten Deckel (4) bis oberhalb des Grubengehäuses (1) hebbar ist.

5. Verteilungsstation nach Anspruch 4, **dadurch gekennzeichnet, dass** der auf und ab bewegbare Behälter (19) für die Kästen (16, 17) mit Sicherungs- und Messapparatur an einer Seite, unten, Koppelstücke (20) trägt welche in der gehobenen Lage des Behälters (19) auf eine längs des oberen Randes des Grubengehäuses (1) gelagerte Welle (21) angreifen, in der Weise, dass der Behälter (19) aus seiner gehobenen Lage um diese Welle (21) in eine Position ausserhalb des Grubengehäuses (1) kippbar ist.

6. Verteilungsstation nach Anspruch 5, **dadurch gekennzeichnet, dass** die Kästen (16, 17) mit Sicherungs- und Messapparatur wie eine Schublade aus dem gekippten Behälter (19) ausziehbar sind.

## Claims

1. A power station adapted to be sunk in place on (semi)public ground to supply a private subcriber or a company, comprising a pit box (1) to be sunk into the ground, said pit box having a first compartment with power plug sockets (8) contained therein and closable by a first cover (3), and a compartment which is closable by a second cover (4) for receiving a transition cabinet (13) to be connected to an underground cable (14), wherein said second cover (4) carries at least one additional cabinet (16, 17) to be connected - through flexible cables (15; 18) - to said transition cabinet (13) and the power plug sockets (8) respectively and adapted to contain safety and measuring equipment, and wherein the power plug sockets on one hand and the cabinet(s) containing safety and measuring equipment on the other hand are mounted for movement from the respective compartments by lifting said first (3) and said second cover (4) respectively, **characterized in that** the power plug sockets (8) are mounted - either individually or in groups and arranged side by side - in containers (11) which are open at the bottom and for the rest completely closed, said container(s) being connected to said first cover (3) which is formed as a hinged lid, wherein in the closed position of the latter there is a slit between the free longitudinal edge of the first cover (3) and the adjacent upper edge of the pit box, through which a supply cable connected to a power plug socket may pass from the pit box to the outside of the latter.

2. A power station according to claim 1, **characterized in that** the container (11) ccontaining said power plug sockets (8) are mounted to be tilted upwardly about an axis (12) which is parallel to the hinge axis (3a) of the respective cover (3).

3. A power station according to claims 1-2, **characterized in that** fixed partitions (7) are provided which separate said containers (11) from one another, when the latter are in their lowered positions within the pit box (1).

4. A power station according to claims 1-3, **characterized in that** said cabinets (16, 17) containing safety and measuring equipment are also mounted in a container (19) which is open at the bottom and for the rest completely closed, said container (19) being mounted for an up and down movement in the space (10) of the pit box (1), such that it may be lifted together with said second cover (4) to a position above said pit box (1).

5. A power station according to claim 4, **characterized in that** the up and down movable container (19) for the cabinets (16, 17) containing said safety and measuring equipment is carrying on one side - at the bottom - coupling members (20) adapted to engage a shaft mounted along the upper edge of the pit box (1) when the container (19) is in its lifted position, in such a way that the container (19) may be tilted about said shaft (21) from the lifted position into a position laterally outside of said pit box (1).

6. A power station according to claim 5, **characterized in that** the cabinets (16, 17) containing said safety and measuring equipment are mounted to be pulled out from the tilted container (19) like a drawer.

## Revendications

1. Poste de distribution d'énergie destiné à être installé en renfoncement sur un terrain (semi) public pour le prélèvement de courant par des personnes privées ou par des entreprises, comportant un logement de fosse (1) devant être placé en renfoncement dans le sol et qui comporte un premier compartiment, qui peut être fermé par un premier couvercle (3) et comporte des prises femelles (8), et un compartiment pouvant être fermé par un second couvercle (4) et servant à loger une boîte de jonction (13) devant être raccordée à un câble souterrain (14), le second couvercle (4) possédant au moins une autre boîte (16, 17) devant être reliée par des câbles flexibles (15; 18) à la boîte de jonction (13) ou aux prises femelles (8), pour un appareillage de sécurité et de mesure, et dans lequel les prises femelles d'une part et le ou les coffrets pour l'appareil de sécurité et de mesure d'autre part peuvent être soulevées moyennant le soulèvement du premier couvercle (3) et du second couvercle (4) à partir des compartiments respectifs, **caractérisé en ce que** les prises femelles (8) sont disposées séparément ou par groupes et côte-à-côte dans des récipients (11) ouverts vers le bas et par ailleurs fermés, lesquels récipients sont reliés au premier couvercle (3) agencé sous la forme d'un couvercle rabattable, une fente étant présente, lorsque ce couvercle est dans la position fermée, entre le bord longitudinal libre du couvercle (3) et le bord supérieur voisin du boîtier de fosse, fente dans laquelle un câble d'appareil d'utilisation, raccordé à une prise (8), peut ressortir à l'extérieur.

2. Poste de distribution selon la revendication 1, **caractérisé en ce que** les récipients (11), qui contiennent les prises femelles (8) sont agencés de manière à être rabattables autour d'un axe (12) qui s'étend parallèlement à l'axe de rotation (3a) du couvercle considéré (3).

3. Poste de distribution selon les revendications 1 et 2, **caractérisé en ce que** les récipients (11) sont séparés les uns des autres dans leur position abaissée dans le boîtier de fosse (1), au moyen de parois transversales fixes (7).

4. Poste de distribution selon les revendications 1-3, **caractérisé en ce que** les coffrets (16, 17) équipées de l'appareillage de sécurité et de mesure sont disposées également dans un récipient (19) ouvert vers le bas et par ailleurs fermé, lequel récipient (19) étant guidé avec possibilité de soulèvement et d'abaissement dans l'espace (10) du boîtier de fosse (1) et peut être soulevé, en combinaison avec le second couvercle (4), jusqu'au-dessus du boîtier de fosse (1).

5. Poste de distribution selon la revendication 4, **caractérisé en ce que** le récipient (19), qui peut être soulevé et abaissé, pour les coffrets (16, 17) comportant un appareillage de sécurité et de mesure portent en bas, sur un côté, des déplacements de couplage (20), qui, lorsque le récipient (19) est dans sa position soulevée, attaquent un arbre (21) tourillonné le long du bord supérieur du logement en fosse (1) de telle sorte que le récipient (19) peut basculer autour de cet arbre (21) depuis sa position soulevée pour venir dans une position située à l'extérieur du boîtier de fosse (1).

6. Poste de distribution selon la revendication 5, **caractérisé en ce que** les boîtes (16, 17) équipées de l'appareillage de sécurité et de mesure peuvent être ressorties, à la manière d'un tiroir, hors du récipient basculé (19).
